# EUROPEAN PATENT SPECIFICATION

(11) **EP 1 093 711 B1**
(45) Date of publication and mention of the grant of the patent: **17.05.2006**
(21) Application number: 01102039.3
(22) Date of filing: 26.08.1997
(51) Int. Cl.: A01K 5/00, A01D 90/10, A01K 5/02

(54) **Material dispensing apparatus**
Futterverteileinrichtung
Appareil pour distribuer du fourrage

(30) Priority: 29.08.1996 GB 9618027; 30.04.1997 GB 9708775
(43) Date of publication of application: 25.04.2001
(62) Divisional of application: 97306512.1
(73) Proprietor: Garnett, Andrew John, Nr. Knutsford, Cheshire WA16 9NE (GB)
(72) Inventor: Garnett, Andrew John, Nr. Knutsford, Cheshire WA16 9NE (GB)
(74) Representative: Wood, Graham

(56) References cited:
- EP-A- 0 003 813
- EP-A- 0 170 732
- DE-C- 459 744
- GB-A- 1 540 999
- US-A- 3 361 302

## Description

This invention concerns material dispensing apparatus for lining cattle stalls, and particularly but not exclusively apparatus for dispensing chopped straw or similar materials.

In cattle farming it is conventional to provide a plurality of stalls for cattle to sleep in. These are often arranged in line adjacent (to) a passageway along which a tractor or other vehicle can move. Such stalls are usually lined with chopped straw or perhaps sawdust or wood savings, which liner material requires regular renewal. Traditionally, straw has been chopped in situ by machinery and directed into the stalls. This is a very dusty job producing unpleasant working conditions.

In the following prior art patent documents, namely EP-A-0170732, GB-A-154999, DE 459744C and EP-A-0003813, there are disclosed dispensing methods for dispensing feed material at slow speeds so that the feed material falls into position, and sometime into troughs, at the ends of the stalls. These methods and the equipment used are not suitable for the lining of stalls. There is also prior art in the form of a dispenser sold by the company Mensch Manufacturing Inc which shows a hopper with a conveyor but with insufficient agitating means to move the material from the receptacle onto the conveying means.

According to the present invention there is provided material dispensing apparatus for lining cattle stalls, comprising a receptacle for material to be dispensed, said receptacle having upwardly diverging opposed side walls, means for agitating material within the receptacle, and a conveyor in communication with the receptacle to receive material therefrom, and to dispense material from the apparatus, the conveyor is arranged in relation to the receptacle to project the material from the apparatus into cattle stalls in a direction parallel to the diverging opposed side walls and is arranged to be driven at a sufficient speed to project the material into the stalls to line same whilst the apparatus is moved along a passageway adjacent a row of said stalls and characterised in that agitating means are provided in the form of at least one auger to agitate the material towards the conveyor.

The invention also provides a method of dispensing lining material into cattle stalls, using an apparatus comprising a receptacle for material to be dispensed, means for agitating material within the receptacle, and a conveyor in communication with the receptacle to receive material therefrom, and to dispense material from the apparatus, said method including moving the apparatus along a passageway adjacent a row of cattle stalls, whilst the conveyor is driven at such a speed as to project the material into the stalls to line same and characterised in that the material, as it passes from the receptacle to the conveyor, is agitated by rotating at least one auger acting as the agitating means.

The conveyor preferably comprises an endless belt. The conveyor is preferably reversible so as to permit material to be selectively dispensed from opposite sides of the apparatus.

The agitating means is preferably constructed so as to provide a substantially constant flow of material from the receptacle to the conveyor. The agitating preferably comprises a pair of parallel augers arranged to rotate in opposite directions. The receptacle is preferably in the form of an open-topped hopper, which desirably has an upwardly diverging cross-section. An opening is preferably provided at the bottom of the receptacle immediately above the conveyor.

The augers are preferably located extending across a lower part of the receptacle, with the opening located substantially therebelow.

The apparatus is preferably removably mountable on a tractor or similar vehicle, and the agitating means and/or conveyor are preferably arranged to be drivable by the tractor or similar vehicle.

The hopper or apparatus is preferably arranged to be pivotal relative to a vehicle upon which the apparatus is mounted such that material can be scooped up by the hopper.

An embodiment of the present invention will now be described by way of example only with reference to the accompanying drawings, in which:-
Fig. 1 is a diagrammatic end view of apparatus according to the invention; and
Fig. 2 is a diagrammatic side view of the apparatus of Fig. 1.

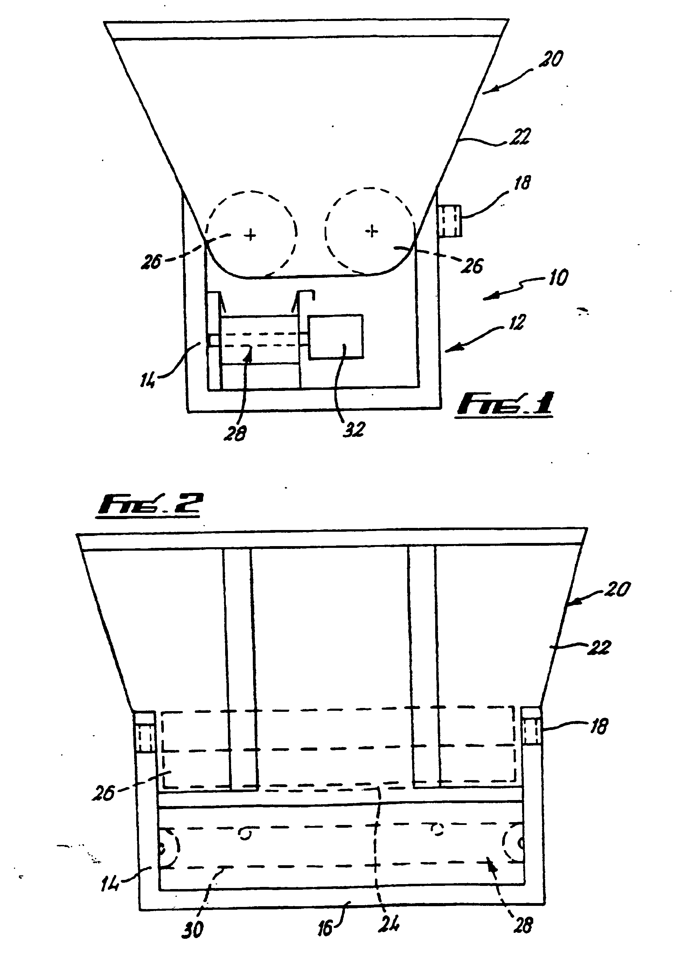

The drawings show material dispensing apparatus 10 suitable for dispensing material such as chopped straw into cattle stalls. The apparatus 10 comprises a frame 12 including two U-shaped members 14 spaced apart and interconnected by side bars 16. Additional cross-members (not shown) may be provided extending between the side bars 16. Mounting brackets 18 in the form of sleeves are provided on each of the members 14 on a respective one of the side limbs towards the upper end thereof.

A hopper 20 is mounted on the frame 12 with the lowermost part of the hopper 20 spaced above the base of the members 14. The hopper 20 has upwardly diverging walls 22. An opening 24 is provided in the base of the hopper 20. Located in the hopper 20 are a pair of augers 26 arranged parallel to the side bar 16, so as to rotate in opposite directions relative to each other. The augers 26 are arranged to be drivable by the hydraulic drive of the tractor or similar vehicle.

Mounted on the frame 12 beneath the hopper 20 is a high speed conveyor 28. The conveyor 28 comprises an endless belt 30 and extends parallel to the bars 16 for substantially the whole length thereof. The conveyor 28 is drivable by a motor 32 connectable to the hydraulic supply from a tractor or similar vehicle. The conveyor 28 is switchable so as to be selectively movable in either direction.

Operation of the apparatus will now be described. When not in use, the apparatus 10 can rest on the ground or elsewhere with the frame 12 engaging the ground. When it is required to use the apparatus 10, the apparatus 10 is mounted on a tractor or similar by fingers or other components on the front or perhaps elsewhere on the tractor, engaging in the sleeves 18. The augers 26 and motor 32 are connected to the hydraulic supply of the tractor. The frame 12 can then be lifted off the ground. The apparatus 10 can be pivoted relative to the tractor to permit chopped straw to be scooped up from a pile into the hopper 20. Once the hopper 20 contains straw it can be returned to a horizontal alignment.

When the tractor is adjacent a cattle stall or other location where chopped straw is to be delivered, the augers 26 and conveyor 28 are operated. The augers 26 prevent bridging or other blocking of the straw and provide a substantially constant stream of straw onto the conveyor 28. The speed of the conveyor 28 is such as to project straw thereof into a required place. The direction of the conveyor 28 can obviously be switched to a required direction depending on the orientation of the tractor relative to the cattle stores etc. Once a load of straw has been dispensed the hopper 20 can be reloaded in a similar manner.

There is thus described apparatus which permits material such as chopped straw to readily be dispensed into required locations. The apparatus permits ready loading thereof and dispensing in a required direction dependent on the orientation of a carrying vehicle. The apparatus is of relatively simple construction and thus permits inexpensive manufacture and reliable operation. Using this apparatus permits chopped straw to be distributed in a way which is much more friendly to workers. The straw can initially be chopped where harvested, ie out of doors, and stored chopped.

Various modifications may be made without departing from the scope of the invention. For example, different means could be provided for agitating the product in the hopper. The hopper could be arranged to be pivotal on the frame to facilitate loading of material thereinto. Any appropriate mounting means could be provided on the frame. Whilst the embodiment is described in relation to spreading chopped straw, such apparatus could readily be used for dispensing a wide range of material such as for instance wood shavings or sawdust.

Whilst endeavouring in the foregoing specification to draw attention to those features of the invention believed to be of particular importance it should be understood that the applicant claims protection in respect of any subject matter falling into the definition of the appended claims.

## Claims

1. Material dispensing apparatus (10) for lining cattle stalls, comprising a receptacle (20) for material to be dispensed, said receptacle (20) having upwardly diverging opposed side walls (22), means (26) for agitating material within the receptacle (20), and a conveyor (28) in communication with the receptacle (20) to receive material therefrom, and to dispense material from the apparatus (10), the conveyor is arranged in relation to the receptacle to project the material from the apparatus into cattle stalls in a direction parallel to the diverging opposed side walls (22) and is arranged to be driven at a sufficient speed to project the material into the stalls to line same whilst the apparatus is moved along a passageway adjacent a row of said stalls and **characterised in that** agitating means are provided in the form of at least one auger (26), to agitate the material towards the conveyor.

2. A method of dispensing lining material into cattle stalls, using an apparatus comprising a receptacle (20) for material to be dispensed, means for agitating material within the receptacle (20), and a conveyor (28) in communication with the receptacle (20) to receive material therefrom, and to dispense material from the apparatus (10), said method including moving the apparatus along a passageway adjacent a row of cattle stalls, whilst the conveyor is driven at such a speed as to project the material into the stalls to line same and **characterised in that** the material, as it passes from the receptacle to the conveyor is agitated by rotating at least one auger (26) acting as the agitating means.

## Patentansprüche

1. Materialausgabevorrichtung (10) zum Einstreuen von Viehstallbuchten, umfassend einen Bunker (20) für auszugebendes Material, wobei der genannte Bunker (20) aufwärts divergierende gegenüberliegende Seitenwände (22), (ein) Mittel (26) zum Rühren von Material in dem Bunker (20) und einen Förderer (28) in Verbindung mit dem Bunker (20) zum Erhalten von Material aus diesem und zum Ausgeben von Material aus der Vorrichtung (10) hat, wobei der Förderer mit Bezug auf den Bunker angeordnet ist, um das Material in einer zu den divergierenden gegenüberliegenden Seitenwänden (22) parallelen Richtung aus der Vorrichtung in die Viehstallbuchten zu werfen, und angeordnet ist, um mit einer ausreichenden Geschwindigkeit angetrieben zu werden, um das Material in die Stallbuchten zu werfen, um diese einzustreuen, während die Vorrichtung an einem Durchgang neben einer Reihe der genannten Stallbuchten entlangbewegt wird, und **dadurch gekennzeichnet, dass** das Rührmittel in der Form von wenigstens einer Schnecke (26) zum Rühren des Materials in Richtung auf den Förderer bereitgestellt ist.

2. Verfahren zum Ausgeben von Streumaterial in Viehstallbuchten unter Verwendung einer Vorrichtung, die ein Behältnis (20) für auszugebendes Material, (ein) Mittel zum Rühren von Material in dem Behältnis (20) und einen Förderer (28) in Verbindung mit dem Behältnis (20) zum Erhalten von Material aus diesem und zum Ausgeben von Material aus der Vorrichtung (10) umfasst, wobei das genannte Verfahren das Bewegen der Vorrichtung an einem Durchgang neben einer Reihe von Viehstallbuchten entlang aufweist, während der Förderer mit einer solchen Geschwindigkeit angetrieben wird, dass er das Material in die Stallbuchten wirft, um diese einzustreuen, und **dadurch gekennzeichnet, dass** das Material beim Übergang vom Bunker zum Förderer durch Drehen von wenigstens einer Schnecke (26), die als das Rührmittel dient, gerührt wird.

## Revendications

1. Appareil (10) pour distribuer du fourrage pour garnir l'intérieur de stalles à bétail, comprenant une trémie (20) pour le fourrage à distribuer, ladite trémie (20) ayant des parois latérales (22) opposées, qui divergent vers le haut, des moyens (26) pour agiter le fourrage à l'intérieur de la trémie (20), et un convoyeur (28) qui communique avec la trémie (20) pour recevoir le fourrage qui provient de celle-ci, et pour distribuer le fourrage depuis l'appareil (10), le convoyeur étant agencé relativement à la trémie de sorte à projeter le fourrage depuis l'appareil jusque dans les stalles à bétail dans une direction parallèle aux parois latérales (22) opposées et divergentes, et est agencé d e sorte à être mené suffisamment rapidement pour projeter le fourrage dans les stalles afin de garnir celles-ci pendant que l'appareil est déplacé le long d'un couloir adjacent à une rangée desdites stalles, et **caractérisé en ce que** des moyens d'agitation sont prévus sous forme d'au moins une vis (26) qui pousse le fourrage vers le convoyeur.

2. Procédé pour distribuer du fourrage dans des stalles à bétail, utilisant un appareil qui comprend un récipient (20) pour le fourrage à distribuer, des moyens pour agiter le fourrage à l'intérieur du récipient (20), et un convoyeur (28) qui communique avec le récipient (20) pour recevoir du fourrage depuis celui-ci, **caractérisé en ce que** le procédé comprend le déplacement de l'appareil le long d'un couloir adjacent à une rangée de stalles pendant que le convoyeur est mené à une vitesse suffisante pour projeter le fourrage dans les stalles afin de garnir celles-ci et **caractérisé en ce que** le fourrage, pendant qu'il passe à partir du récipient (20) sur le convoyeur, est agité par la rotation d'au moins une vis (26) qui fonctionne comme moyen d'agitation.
